# EUROPEAN PATENT APPLICATION

(11) **EP 3 069 947 A1**
(43) Date of publication of application: **21.09.2016**
(21) Application number: 14862782.1
(22) Date of filing: 20.10.2014
(51) Int. Cl.: B60W 10/04, B60K 6/52, B60L 7/24, B60W 10/08, B60W 10/18, B60W 10/188, B60W 20/00, F02D 29/06

(54) **MOVING BODY DRIVE CONTROL DEVICE**

(30) Priority: 12.11.2013 JP 2013233617
(71) Applicant: Hitachi Automotive Systems, Ltd., Hitachinaka-shi, Ibaraki 312-8503 (JP)
(72) Inventor: YOKOYAMA Atsushi, Tokyo 100-8280 (JP); IMANISHI Yuto, Tokyo 100-8280 (JP); TANIMICHI Taisetsu, Hitachinaka-shi Ibaraki 312-8503 (JP)
(74) Representative: MERH-IP Matias Erny Reichl Hoffmann Patentanwälte PartG mbB
(86) International application number: PCT/JP2014/077771
(87) International publication number: WO 2015/072286

(57) **Abstract**

When a regenerative braking force is controlled based on a target stop position or a target following distance, a driver may have an uncomfortable feeling if a vehicle is stopped or a following distance is secured by the regenerative braking force only and thus, the driver is prompted to perform a brake pedal operation and the driver adjusts deceleration by himself to reduce the driver's uncomfortable feeling. Regenerative deceleration by a motor when the driver operates neither accelerator pedal nor brake pedal is controlled to be smaller than deceleration needed to stop in the target stop position or deceleration needed to reduce a relative speed to the preceding vehicle to zero at the target following distance.

## Description

### Technical Field

The present invention relates to a method of regenerative control of a motor vehicle using an external recognition sensor.

### Background Art

In recent years, motor vehicles that travel by wheels being driven by an engine and a motor (electric motor) have been developed.

Such a motor vehicle is accelerated by torque of an engine being assisted by a motor or the motor alone during acceleration and recovers energy by generating power using the motor during deceleration. Accordingly, energy efficiency can be improved by assisting torque using the motor or using the motor alone in an area where energy efficiency of the engine is low and energy recovered during deceleration can be used for acceleration so that fuel efficiency can be improved.

In addition, automatic braking control and automobile speed control devices using an external recognition device to soften the impact during collision and reduce driver's driving loads have been proposed. Such an automatic braking control device can adjust the deceleration by detecting the distance to an obstacle, the following distance, and the relative speed using the external recognition device and calculating appropriate deceleration from the detection results for automatic deceleration.

In the meantime, a regenerative braking control device like one in PTL1 that controls a regenerative braking force based on the shift position, vehicle speed, obstacles and the like has been proposed. In PTL1, a means for determining a target braking force based on at least any one of the vehicle speed, accelerator releasing speed, road gradient, vehicle weight, relative physical relation with a forward obstacle, and road surface friction coefficient of the road surface immediately before the accelerator is released and a means for controlling a regenerative braking force based on the target braking force are provided. According to PTL1, a motor-driven vehicle capable of generating a regenerative braking force corresponding to an engine brake can be implemented as a vehicle capable of dealing with fluctuations of vehicle running resistance by controlling the regenerative braking force and also capable of producing a large engine brake effect in a situation in which a large braking force is needed before a brake operation.

### Citation List

### Patent Literature

PTL1: JP 9-37407 A

### Summary of Invention

### Technical Problem

In PTL1, however, though the target regenerative braking force is controlled, what sort of regenerative braking force to generate for a target stop position is not described. In addition, whether to decelerate by the regenerative braking force only in a traveling section up to the target stop position or a friction braking force is jointly used is not described. (Hereinafter, deceleration caused by a regenerative braking force will be called regenerative deceleration) As a result, when the target stop position is set, various cases such as a case when the vehicle can be stopped in the target stop position by the regenerative braking force only, a case when the vehicle is stopped before the target stop position by the regenerative braking force only, and a case when a friction braking force needs to be used jointly can be considered and the driver may have an uncomfortable feeling. Also in the following distance control to the preceding vehicle, various cases such as a case when the target following distance can be secured by the regenerative braking force only, a case when deceleration is finished before the target following distance by the regenerative braking force only, and a case when a friction braking force needs to be used jointly can be considered and the driver may have an uncomfortable feeling. Also, if the regenerative braking force changes when the target stop position can be recognized by an external recognition device and when the target stop position cannot be recognized, the driver may have an uncomfortable feeling.

### Solution to Problem

The present invention is characterized in that a regenerative braking force is calculated from the target stop position of a vehicle and the control is exercised such that regenerative deceleration caused by the regenerative braking force is limited to a magnitude with which the vehicle cannot be stopped in the target stop portion or to a magnitude with which the target following distance cannot be secured.

### Advantageous Effects of Invention

By limiting a regenerative braking force to a magnitude with which the vehicle cannot be stopped in the target stop portion or to a magnitude with which the target following distance cannot be secured, a regenerative braking control device in the present invention prompts the driver's brake pedal operation and the driver himself (herself) adjusts the deceleration so that an uncomfortable feeling of the driver can be decreased.

### Brief Description of Drawings

[FIG. 1] FIG. 1 is a diagram showing the configuration of a vehicle on which a drive control device of the present invention is mounted.
[FIG. 2] FIG. 2 is a diagram illustrating main components of the present invention and the flow of signals.
[FIG. 3] FIG. 3 is a diagram showing a flow chart of the drive control device of the present invention.
[FIG. 4] FIG. 4 is a diagram showing a control method of the present invention.
[FIG. 5] FIG. 5 is a diagram showing the control method of the present invention.
[FIG. 6] FIG. 6 is a diagram showing the control method of the present invention.
[FIG. 7] FIG. 7 is a diagram showing the control method of the present invention.
[FIG. 8] FIG. 8 is a diagram showing the control method of the present invention.

### Description of Embodiments

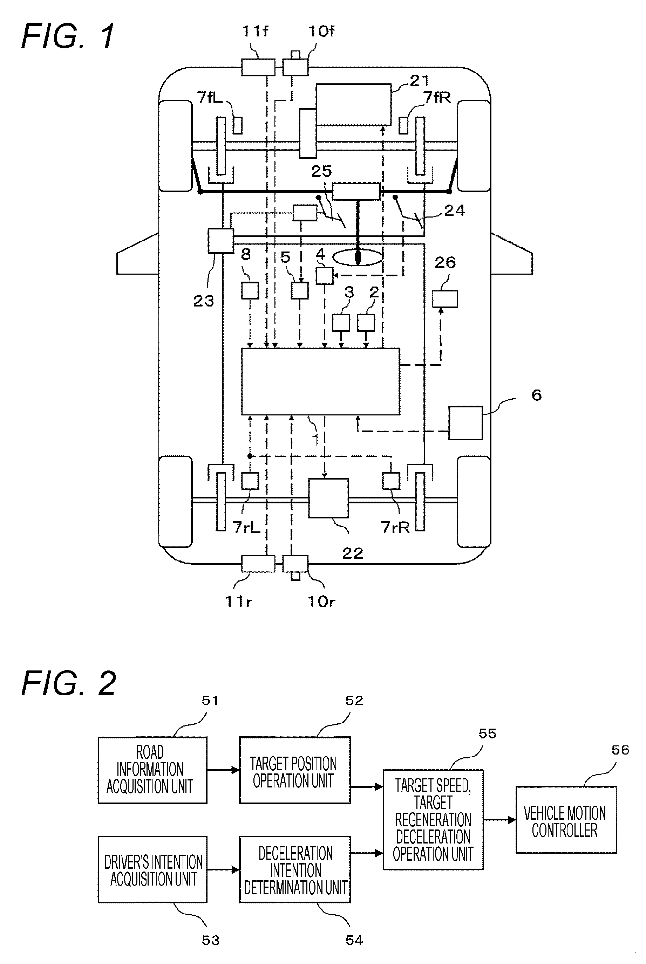

Hereinafter, an embodiment of the present invention will be described based on the drawings. FIG. 1 is the configuration of a vehicle on which a braking support device according to an embodiment of the present invention is mounted. The present embodiment will be described by taking a vehicle of a passenger automobile as an example, but the present invention can also be applied to any moving body operated by a driver such as a commercial vehicle and a construction machine.

The vehicle is provided with a steering angle sensor 2 of steering, a direction indicator lever 3, an accelerator pedal 24, an accelerator pedal operation amount sensor 4, a brake pedal 25, and a brake pedal operation amount sensor 5 as operation amount detection means of the driver to send a signal in accordance with the operation amount of the driver to a controller 1.

The controller 1 is connected to a navigation device 6 to acquire the set route, map information, local vehicle position on the map, direction of the local vehicle, and surrounding road information (such as the signal position, stop line position, lane width, number of lanes, information about lane curves, lane marker width, number of lane markers, information about lane marker curves, speed limit, distinction of motorways and ordinary roads, presence/absence of branch roads and the like) from the navigation device 6. The navigation device 6 has a function to communicate with surroundings of the vehicle and can acquire, for example, information about the color of a signal, information about timing when the color of a signal changes, and information about other vehicles invisible from the vehicle. The vehicle is also provided with wheel speed sensors 7fL, 7fR, 7rL, 7rR on the left and right of the front and back of the vehicle and a vehicle behavior sensor 8 as means for detecting a driving state of the vehicle to transmit a signal to the controller 1 in accordance with the driving state of the vehicle. The vehicle behavior sensor 8 can detect forward and backward acceleration, horizontal acceleration, and yaw rate. In addition, the vehicle is provided with a front camera 10f, a front radar 11f, a rear camera 10r, and a rear radar 11r as means for detecting the external environment around the local vehicle to transmit information about lane markers and obstacles around the local vehicle to the controller 1. The front camera 10f has functions as an image acquisition means for acquiring an image around the local vehicle and as a lane recognition means for recognizing a lane based on a lane marker or a road surface boundary in an acquired image. The front camera 10f recognizes the signal position, stop line position, signal color, sign whether a right turn or left turn is permitted, lane marker such as a white line, and road surface boundary such as a shoulder and outputs the physical relationship with the local vehicle, width between lane markers of the local lane or neighboring lane, width between left and right road surface boundaries, and types of the lane marker and road surface boundary. Road information about the lane marker and road surface boundary has information in a plurality of positions in front of the local vehicle. Further, road information has information in a plurality of positions in backward and lateral directions of the local vehicle. Types of the lane marker include the type such as the line, cat's eyes, and Botts' Dots, color of the line, and type of the line (solid line, broken line, dotted line, or hatching). Types of the road surface boundary include the edge of a shoulder, gutter, curb, guard rail, wall, bank and the like.

The front camera 10f also recognizes obstacles such as other vehicles and pedestrians and outputs the physical relationship and relative speed relative to the local vehicle. The front radar 11f recognizes obstacles such as other vehicles and pedestrians and outputs the physical relationship and relative speed relative to the local vehicle. The front radar 11f has features of being able to recognize an obstacle farther away than the front camera 10f with precision.

On the other hand, the front camera 10f has features of being able to determine the type of obstacle with a wider detection angle than that of the front radar 11f.

The vehicle includes an engine 21 and a motor 22 and the controller 1 makes a drive request to these drive devices based on the driver's operation amount and the external environment. The controller 1 makes an acceleration request to the engine 21 and the motor 22 when the vehicle needs to be accelerated and makes a deceleration request to the motor 22 when the vehicle needs to be decelerated. The motor 22 is, for example, an alternating current synchronous motor device connected to the rear wheel and when a braking request is received, applies a braking force to the rear wheel and applies a regenerative braking force to the vehicle. Kinetic energy of the vehicle is stored in a battery (not shown) as electric energy by regenerative braking of the motor 22 and the electric energy is reused when the motor is driven. The vehicle also includes a friction braking device 23 and an operating force of the driver on the brake pedal 25 is transmitted to the wheel via a brake fluid, a brake pad, and a brake rotor (not shown) to cause a friction braking force to act on the wheel. The friction braking device 23 converts kinetic energy of the vehicle into thermal energy through the brake pad and brake rotor before releasing the energy out of the vehicle. The vehicle also includes an information providing means 26 for providing information to the driver and the information providing means provides support information by an image display, a sound, an alarm lamp or the like in accordance with the type of traveling support. The information providing means 26 is, for example, a monitor device containing a speaker and may be installed not only in one location, but also in a plurality of locations. FIG. 2 is a diagram illustrating main components and the flow of signals regarding a braking support device according to an embodiment of the present invention. A road state acquisition unit 51 an operation unit that acquires information such as the signal position, stop line position, signal color, sign whether a right turn or left turn is permitted, lane position, lane curvature, lane width, and number of lanes from at least one of the front camera 10f, the front radar 11f, and the navigation device 6. A target stop position operation unit 52 calculates the position where the vehicle should stop (hereinafter, called a target stop position) and the distance thereto based on information (particularly, the position of the preceding vehicle and the stop line position) from the road state acquisition unit 51. A driver's intention acquisition unit 53 is an operation unit that acquires information about the driver's operation from the accelerator pedal operation amount sensor 4, the brake pedal operation amount sensor 5, and a traveling mode setting switch (not shown). A deceleration intention determination unit 54 is an operation unit that determines whether the driver intends to decelerate based on information from the driver's intention acquisition unit 53. When, for example, the driver's foot is not on the accelerator pedal, the deceleration intention determination unit determines that the driver intends to decelerate. A target speed, target acceleration operation unit 55 calculates the target speed in the target stop position and the deceleration until the vehicle stops in the target stop position based on the distance to the target stop position, driver's deceleration intention, and driving state of the vehicle. A vehicle motion controller 56 controls the motion of vehicle based on the target deceleration from the target speed, target acceleration operation unit 55. More specifically, regenerative torque is given to the motor 22 to apply a braking force to the vehicle.

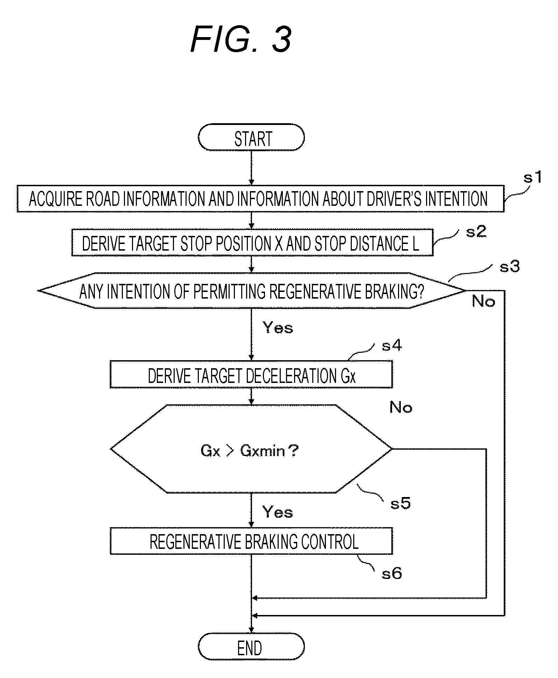

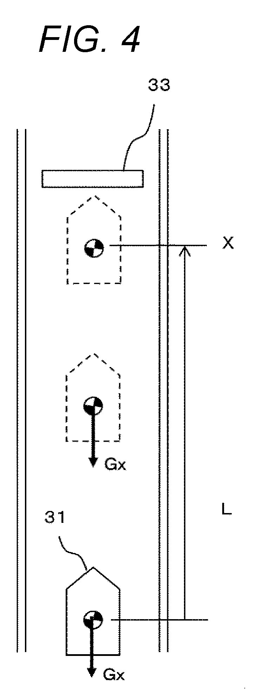

Next, the operation of an embodiment of the present invention will be described using FIGS. 3 and 4. FIG. 3 is a flow chart in which regenerative braking control is performed and FIG. 4 is an example of the regenerative braking control up to a stop line 33.

In step s1, road information such as the position of the stop line 33, operation information of the driver, and vehicle motion information such as the speed are acquired from various sensors. In step s2, a target stop position X and a distance L (target stop distance L) from the local vehicle 31 to the stop line as shown in FIG. 4 are determined based on the road information such as the position of the stop line 33. In step s3, whether the driver permits an intervention of automatic deceleration is determined from operation amount information of the driver. If the driver's foot is not on the accelerator pedal, the process proceeds to step s4 by determining that the driver intends to permit automatic deceleration. If it is determined that the driver does not intend to permit, the control is terminated. In step s4, target deceleration Gx up to the target stop position X is calculated from the target stop distance L.

In step s5, whether regenerative braking is needed is determined. If the target deceleration Gx determined in step s4 is larger than predetermined lower limit deceleration Gxmin, the process proceeds to step s6 by determining that deceleration by the regenerative braking is needed. On the other hand, if the target deceleration Gx is equal to the predetermined lower limit deceleration Gxmin or less, the control is terminated without performing regenerative braking by determining that deceleration by the running resistance or so is sufficient.

In step s6, the motor 22 is concretely driven so as to be able to generate the target deceleration Gx derived in step s5 to apply a braking force to the vehicle.

In these processes, the target deceleration Gx is determined by setting the stop line position as the reference position, but the target stop position X is not limited to the stop line and the target deceleration Gx may also be determined by setting the signal position, intersection position, or the preceding vehicle position as the reference position.

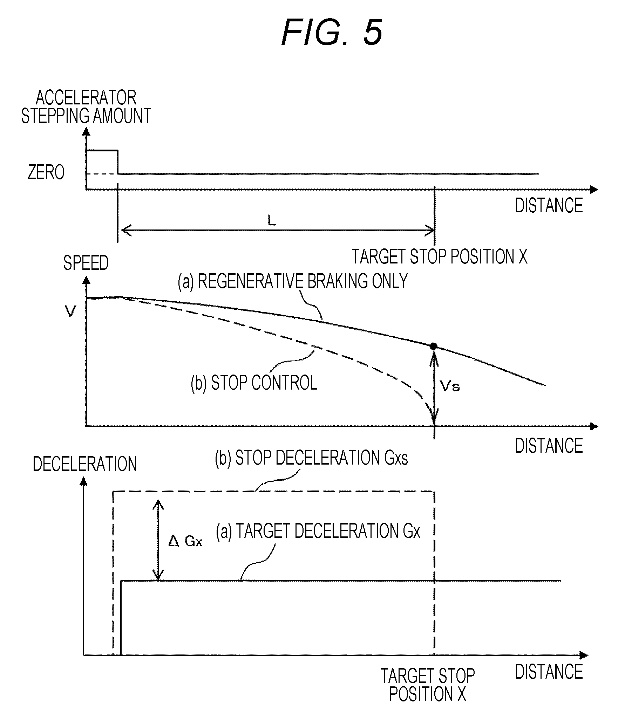

Changes of the speed and acceleration when the present invention is carried out are shown using FIG. 5. When, as shown in FIG. 4, the accelerator pedal is released before the target stop position X and the brake pedal is not operated, the target deceleration Gx is calculated in accordance with the target stop distance L and the speed V to generate deceleration.

When calculating the target deceleration Gx, stop deceleration Gxs assuming that the vehicle stops at constant deceleration up to the target stop position X is determined from Gxs = V²/(2L). That is, if decelerated at the stop deceleration Gxs, the vehicle can stop in the target stop position X. Next, the target deceleration Gx by regenerative braking only when the brake pedal is not stepped on is set such that Gx < Gxs is satisfied. By setting the target deceleration Gx smaller than the stop deceleration as shown above, the vehicle cannot be stopped in the target stop position X by deceleration of the regenerative braking only so that the driver can be prompted to perform a brake pedal operation.

To set Gx, the target speed Vs while passing the target stop position when decelerated by the regenerative braking only is set by the following formula: Gx = (V²-Vs²)/(2L)

By setting the target speed Vs larger than zero, the target deceleration Gx is necessarily smaller than the stop deceleration Gxs so that the driver can be prompted to operate the brake pedal.

The speed V changes like the speed change in FIG. 5(b) if deceleration of the stop deceleration Gxs is assumed and the vehicle stops in the target stop position X. In the deceleration by the regenerative braking only, on the other hand, the speed V changes like the speed change in FIG. 5(a) and the speed Vs in the target stop position X is larger than zero.

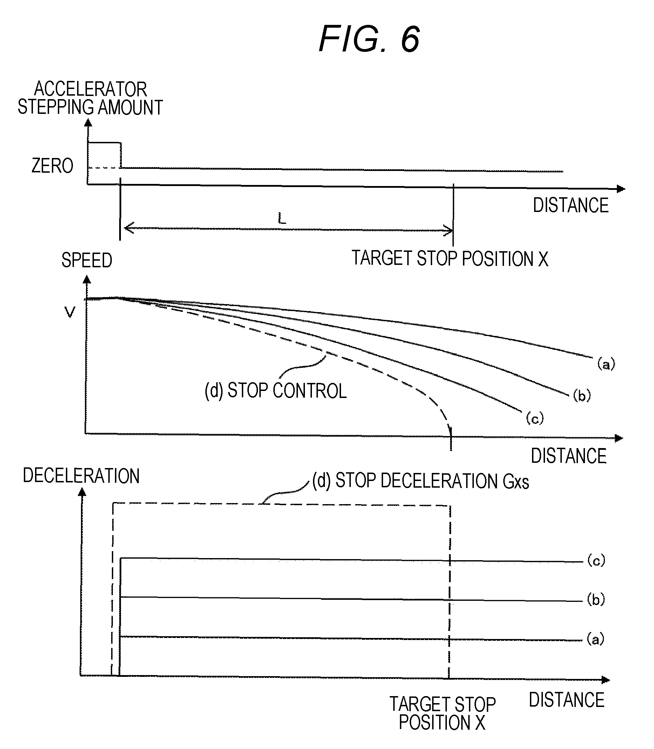

If the driver intends to stop in the target stop position X, in addition to the deceleration Gx by the regenerative braking, the driver generates a lacking portion ΔGx of the deceleration by friction braking caused by a brake pedal operation. Accordingly, the vehicle can be stopped in the target stop position by the joint use of the regenerative braking and friction braking. When the target deceleration Gx is set smaller than the stop deceleration Gxs(= V²/(2L)), the speed V and the stop distance L when the accelerator pedal is spoken can continue to be used, but the timing is not limited to the release of the accelerator pedal. That is, by sequentially calculating the stop deceleration Gxs in accordance with V and L that change from hour to hour and setting the target deceleration Gx at that time smaller than the stop deceleration Gxs, the driver can be made to recognize that the vehicle cannot be stopped in the target stop position by the regenerative braking only. Next, a control example in which the magnitude of deceleration is adjusted more finely in accordance with external world information will be shown using FIG. 6. It is assumed in the description of FIG. 4 that the vehicle stops on the stop line, but whether to stop on the stop line depends on the signal color. Even if the signal is red at some time, if the change of the color to green when the vehicle passes the signal can be predicted, there is no need to stop on the stop line. Thus, by changing the deceleration in accordance with the probability (likelihood) that the vehicle should stop on the stop line, the deceleration can be made closer to the driving operation of the driver and an uncomfortable feeling of regenerative braking control can be reduced.

The color and color changes are not necessarily detectable by all external sensors. If the front camera 10f is a monochrome camera, the signal position and the distance to the signal can be detected, but it is difficult to detect the color. If the front camera 10f is a color camera, the color can be detected. Further, if the navigation device 6 having a communication function can acquire information about the timing when the signal color changes, whether the local vehicle can pass an intersection at the current speed can be determined from the speed of the local vehicle and the timing information of the signal change.

In FIG. 6, the target deceleration Gx is changed in accordance with three patterns of (a) the signal position can be detected, but color information is unknown, (b) the signal position and the color can be detected, but the timing of color change cannot be detected, and (c) in addition to the signal position and color information, the timing of color change can be detected.

Changes of the speed and acceleration when the signal position can be detected, but color information is unknown are shown in FIG. 6(a). If the color information is unknown, the probability that the vehicle should stop and the probability that there is no need for the vehicle to stop are considered to be about 50-50. In this case, the dependence on the driver's operation is increased by setting the target deceleration Gx that is relatively weak.

Changes of the speed and acceleration when the signal position and color information can be detected, but the timing of color change cannot be detected are shown in FIG. 6(b). If the signal color can be determined to be red, the probability that the vehicle should stop is considered to be higher than the probability that there is no need for the vehicle to stop and thus, a relatively large regeneration amount is secured by setting the target deceleration Gx that is relatively weak.

Changes of the speed and acceleration when in addition to the signal position and color information, the timing of color change can be detected are shown in FIG. 6(c). Because stopping at the signal can be predicted almost reliably, strong regenerative braking is caused to act by setting the target deceleration Gx that is larger than the cases of (a) and (b) described above when it is determined that the vehicle needs to stop.

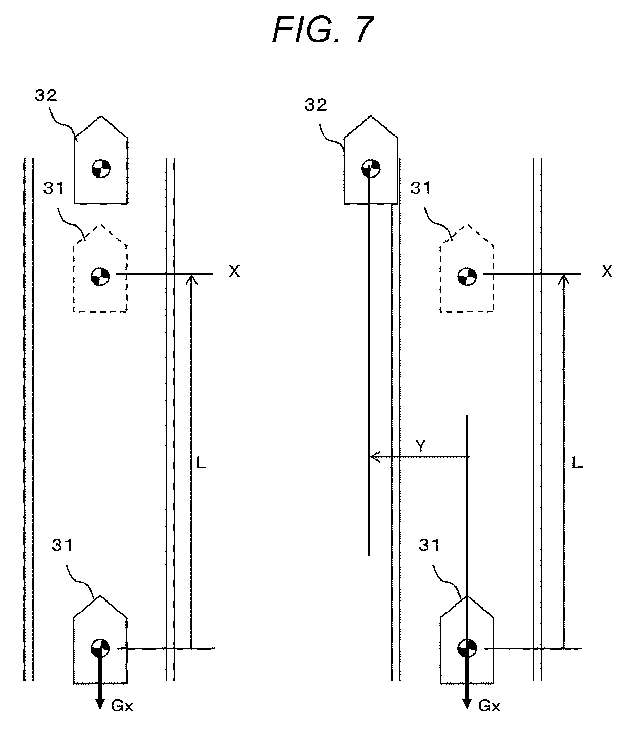

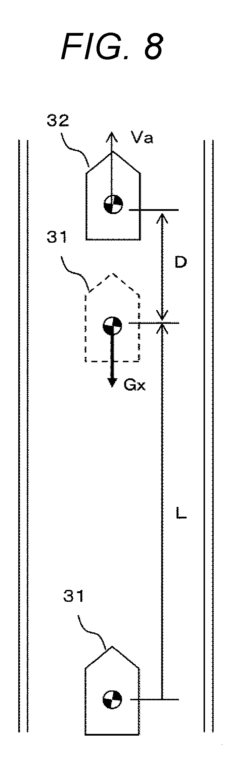

Even when the target deceleration Gx is changed depending on the signal color, the magnitude of change is set smaller than that of the stop deceleration Gxs to prompt the driver to operate. In addition, an uncomfortable feeling of the driver can be reduced by estimating the probability that the vehicle should stop in accordance with signal information and adjusting the target deceleration Gx. Next, another control example in which the magnitude of deceleration is adjusted in accordance with external world information will be shown using FIG. 7. When, as shown in the diagram on the left of FIG. 7, there is a stopped vehicle (preceding vehicle 32) in front of the local vehicle 31, if the vehicle is stopped in the center on the local lane, the local vehicle 31 needs to decelerate and stop to avoid collision. However, if, as shown in the diagram on the right of FIG. 7, the vehicle stopped in front is stopped in a position deviating from the local lane, there is no need for the local vehicle 31 to stop. Therefore, whether to stop the local vehicle 31 with respect to the vehicle in front changes depending on not only the distance to the preceding vehicle, but also an offset amount Y from the local lane. When, as shown in the diagram on the left of FIG. 7, the need to stop the vehicle can be determined with a high probability, as shown in FIG. 6(c), relatively strong regenerative braking is caused to act to increase the regeneration amount. On the other hand, when, as shown in the diagram on the right of FIG. 7, the need to stop is less likely, as shown in FIG. 6(a), an uncomfortable feeling of the driver is reduced by limiting to relatively weak regenerative braking. Next, still another control example in which the magnitude of deceleration is adjusted in accordance with external world information will be shown using FIG. 8. FIG. 8 shows a state in which the front camera 10f or the front radar 11f can detect the preceding vehicle 32 traveling at speed Va in front of the local vehicle and the local vehicle approaches the preceding vehicle 32 due to the faster speed V of the local vehicle (V > Va).

Traveling by following with the target following distance D is assumed and traveling at the same speed Va as the preceding vehicle is aimed for. If the deceleration while approaching the preceding vehicle by decelerating is following distance securing deceleration Gxc, which is constant, the following distance securing deceleration is calculated from Gxc = (V² - Va²) /(2L). That is, if the deceleration is continued at the following distance securing deceleration Gxc, the vehicle can travel by following the preceding vehicle with the target following distance D. Next, the target deceleration Gx by regenerative braking only when the brake pedal is not stepped on is set such that Gx < Gxc is satisfied. By setting the target deceleration Gx smaller than the following distance securing deceleration Gxc as shown above, the vehicle approaches the preceding vehicle exceeding the target following distance D by deceleration of the regenerative braking only so that the driver can be prompted to perform a brake pedal operation. By presenting the magnitude of the regenerative deceleration Gx as described above to the driver through the information providing means 26, an uncomfortable feeling of the driver can be reduced still more. Also, by displaying the target speed Vs in the target stop position, the intention of the controller 1 can be presented to the driver. If no brake pedal operation is performed by the driver even if the controller 1 assumes the driver's brake pedal operation, the driver is alarmed by sound or an alarm lamp. Accordingly, the driver's brake pedal operation can be prompted more reliably.

It is also effective to perform the control by matching the driver's personality to reduce an uncomfortable feeling. If, for example, the key to activate the vehicle system has a function of personal authentication, the regenerative deceleration can be adjusted by learning driving patterns of each driver based on the result of personal authentication. Accordingly, an uncomfortable feeling caused by the magnitude of regenerative deceleration can be reduced. According to the embodiment to which the present invention is applied, as described above, the deceleration by regenerative braking is adjusted in accordance with the external environment such as the stop position and preceding vehicles and set smaller than the deceleration for the vehicle to stop in the target stop position and the deceleration to secure the target following distance. Accordingly, the driver can be prompted to operate the brake pedal and the driver can be entrusted with fine-tuning of the stop operation and deceleration so that a regenerative braking control device capable of reducing an uncomfortable feeling of the driver can be provided.

### Reference Signs List

- 1: controller
- 2: steering angle sensor
- 3: direction indicator lever
- 4: accelerator pedal operation amount sensor
- 5: brake pedal operation amount sensor
- 6: navigation device
- 7fL, 7fR, 7rL, 7rR: wheel speed sensor
- 8: vehicle behavior sensor
- 10f: front camera
- 10r: rear camera
- 11f: front radar
- 11r: rear radar
- 21: engine
- 22: motor
- 23: friction braking device
- 2: accelerator pedal
- 25: brake pedal
- 26: information providing means
- 31: local vehicle
- 32: preceding vehicle
- 33: stop line
- 51: road state acquisition unit
- 52: target stop position operation unit
- 53: driver's intention acquisition unit
- 54: deceleration intention determination unit
- 55: target acceleration operation unit
- 56: vehicle motion controller

## Claims

1. A drive control device of a vehicle (moving body) comprising:
a friction braking device that releases kinetic energy of the moving body as thermal energy in accordance with a brake pedal operation of a driver;
a motor that regenerates the kinetic energy of a vehicle as electric energy;
an external recognition sensor that detects a position where the vehicle should stop or a following distance to a preceding vehicle; and
a target position operation unit that calculates a target stop position or a target following distance of the vehicle, wherein
regenerative deceleration by the motor when the driver operates neither accelerator pedal nor brake pedal is controlled to be smaller than deceleration needed to stop in the target stop position or deceleration needed to reduce a relative speed to the preceding vehicle to zero at the target following distance.

2. A drive control device of a vehicle (moving body) comprising:
a friction braking device that releases kinetic energy of the moving body as thermal energy in accordance with a brake pedal operation of a driver;
a motor that regenerates the kinetic energy of a vehicle as electric energy;
an external recognition sensor that detects a position where the vehicle should stop or a following distance to a preceding vehicle; and
a target position operation unit that calculates a target stop position or a target following distance of the vehicle, wherein
when regenerative deceleration is generated by the motor while the driver operates neither accelerator pedal nor brake pedal, a speed of the vehicle in the target stop position or a relative speed to the preceding vehicle at the target following distance is controlled to the speed larger than zero.

3. The drive control device of a vehicle (moving body) according to claim 1 or 2, wherein
a regenerative braking force is controlled such that with an increasing probability that the driver should stop in the target stop position, the regenerative deceleration by the motor is increased or the speed in a stop position is decreased.

4. The drive control device of a vehicle (moving body) according to claim 3, wherein
a regenerative braking force is controlled such that the regenerative deceleration by the motor is increased or the speed in a stop position is decreased when a signal color can be recognized than when the signal color cannot be recognized.

5. The drive control device of a vehicle (moving body) according to claim 3, wherein
a regenerative braking force is controlled such that with a decreasing offset amount of a position in a left and right direction of the preceding vehicle with respect to the vehicle, the regenerative deceleration by a control motor is increased or the speed in a stop position is decreased so that the speed in the target stop position is increased.
